# EUROPEAN PATENT APPLICATION

(11) **EP 4 841 336 A1**
(43) Date of publication of application: **18.11.2026**
(21) Application number: 26178885.5
(22) Date of filing: 15.05.2026
(51) Int. Cl.: G02F 1/133, G02F 1/137

(54) **SELF-POWERED DISPLAY DEVICE**

(30) Priority: 15.05.2025 US 202563806645 P
(71) Applicant: Iris Optronics Co., Ltd., Tainan City 711010 (TW)
(72) Inventor: CHEN, Chih Wei, 310021 Hsinchu County (TW); SHIH, Ching Chieh, 238670 New Taipei City (TW); CHANG, Yu Kun, 310021 Hsinchu County (TW); LIAO, Chi Chang, 700022 Tainan City (TW)
(74) Representative: Buzzi, Notaro & Antonielli d'Oulx S.p.A.

(57) **Abstract**

A self-powered display device (100) is proposed, and includes a solar module (110), an active display panel (120) and a cholesteric liquid crystal display panel (130). A substrate (111) of the solar module includes a non-power-generating region (A1) and a power-generating region (A2). The active display panel (120) is disposed on the non-power-generating region (A1) and forms a coplanar structure with the substrate (111). The cholesteric liquid crystal display panel (130) is stacked on the coplanar structure and includes a display region, wherein the display region covers the non-power-generating region (A1) and the power-generating region (A2). The solar module (110) is configured to generate electrical power, and the electrical power is supplied to the active display panel (120) and the cholesteric liquid crystal display panel (130). The active display panel (120) displays dynamic information having a high refresh rate, and the cholesteric liquid crystal display panel (130) displays static information having a low refresh rate.

## Description

### BACKGROUND

### Technical Field

The present disclosure relates to a display device. More particularly, the present disclosure relates to a self-powered display device that combines an active display and a cholesteric liquid crystal display.

### Description of Related Art

In daily life, various types of simple signage are commonly used, such as traffic signs and sports field signs. When such signs employ an electronic paper (E-paper) display, in addition to presenting basic information, the signs may further provide diversified display content, thereby enhancing the richness of information delivery.

However, E-paper displays primarily rely on the reflection of ambient light to present images, and their display characteristics are more suitable for static information or information with a low refresh rate. In application scenarios requiring real-time updates or dynamic displays, E-paper displays suffer from insufficient refresh speed. For example, in traffic sign applications, when ambient illumination is inadequate, the visibility of an E-paper display is reduced, and the E-paper display is unable to provide dynamic warning information in a timely manner. As another example, in sports field sign applications, when real-time information such as wind speed or wind direction needs to be displayed, an E-paper display is unable to promptly reflect the latest conditions, which may adversely affect a user's judgment. Accordingly, there remains a need in the market for a display device capable of achieving both low-power display operation and real-time dynamic updates, and therefore industry participants continue to seek solutions to address this issue.

### SUMMARY

According to one aspect of the present disclosure, a self-powered display device includes a solar module, an active display panel and a cholesteric liquid crystal display panel. The solar module includes a substrate. The substrate has a non-power-generating region and a power-generating region, and the non-power-generating region is different from the power-generating region. The active display panel is disposed on the non-power-generating region and electrically connected to the solar module. The active display panel and the substrate form a coplanar structure. The cholesteric liquid crystal display panel is stacked on the coplanar structure and electrically connected to the solar module. The cholesteric liquid crystal display panel has a display region, and the display region covers the non-power-generating region and the power-generating region. The solar module is configured to generate an electrical power, and the electrical power is supplied to the active display panel and the cholesteric liquid crystal display panel. The active display panel is configured to display a dynamic information having a high refresh rate, and the cholesteric liquid crystal display panel is configured to display a static information having a low refresh rate.

According to the self-powered display device of the aforementioned aspect, wherein the active display panel is laminated on the non-power-generating region of the substrate.

According to the self-powered display device of the aforementioned aspect, wherein the active display panel is attached to the non-power-generating region of the substrate.

According to the self-powered display device of the aforementioned aspect, wherein the solar module further includes a plurality of power-generating units, and the power-generating units are laminated on the power-generating region and configured to generate the electrical power.

According to the self-powered display device of the aforementioned aspect, wherein the power-generating units are spaced apart from one another and arranged in an array.

According to the self-powered display device of the aforementioned aspect, wherein the active display panel includes a plurality of light-emitting units, and the light-emitting units are laminated on the non-power-generating region and arranged around the power-generating units.

According to the self-powered display device of the aforementioned aspect, wherein the self-powered display device further includes a light-shielding element. The light-shielding element partially covers the active display panel and the substrate. The light-shielding element and the cholesteric liquid crystal display panel are respectively located on opposite sides of the active display panel.

According to the self-powered display device of the aforementioned aspect, wherein the self-powered display device further includes a transparent adhesive layer. The transparent adhesive layer is disposed between the coplanar structure and the cholesteric liquid crystal display panel, and the cholesteric liquid crystal display panel is attached to the coplanar structure through the transparent adhesive layer.

According to the self-powered display device of the aforementioned aspect, wherein the active display panel is configured to emit a visible light toward the cholesteric liquid crystal display panel, and a wavelength range of the visible light falls within a high-transmittance band of the cholesteric liquid crystal display panel.

According to the self-powered display device of the aforementioned aspect, wherein the self-powered display device further includes a control module and an energy storage module. The control module is electrically connected to the solar module, the active display panel, and the cholesteric liquid crystal display panel. The energy storage module is electrically connected to the control module. The control module is configured to control the energy storage module to store the electrical power generated by the solar module, and to control the energy storage module to supply the electrical power to the control module, the active display panel, and the cholesteric liquid crystal display panel.

According to the self-powered display device of the aforementioned aspect, wherein the control module performs a power allocation control according to a power generation amount of the solar module, a power consumption of the active display panel, and a residual power amount, such that the residual power amount, the power consumption, and the power generation amount satisfy: Pa / P_LED > 1, and P_LED / PV < 0.75. Wherein PV represents the power generation amount, P_LED represents the power consumption, Pa represents the residual power amount, and the residual power amount is a remaining electrical power obtained after subtracting a screen-update power consumption of the cholesteric liquid crystal display panel and a static power consumption of the control module from the electrical power generated by the solar module.

According to another aspect of the present disclosure, a self-powered display device includes a solar module, an active display panel and a cholesteric liquid crystal display panel. The solar module includes a substrate. The substrate has a non-power-generating region and a power-generating region, and the non-power-generating region is different from the power-generating region. The active display panel is disposed on the non-power-generating region and electrically connected to the solar module. The cholesteric liquid crystal display panel is disposed on the power-generating region and electrically connected to the solar module. The cholesteric liquid crystal display panel and the active display panel form a coplanar structure. The cholesteric liquid crystal display panel has a display region, and the display region covers the power-generating region. The solar module is configured to generate an electrical power, and the electrical power is supplied to the active display panel and the cholesteric liquid crystal display panel. The active display panel is configured to display a dynamic information having a high refresh rate, and the cholesteric liquid crystal display panel is configured to display a static information having a low refresh rate.

According to the self-powered display device of the aforementioned aspect, wherein the active display panel is attached to the non-power-generating region of the substrate, and the cholesteric liquid crystal display panel is attached to the power-generating region of the substrate.

According to the self-powered display device of the aforementioned aspect, wherein the solar module further includes a plurality of power-generating units, and the power-generating units are laminated on the power-generating region and configured to generate the electrical power.

According to the self-powered display device of the aforementioned aspect, wherein the self-powered display device further includes a transparent adhesive layer. The transparent adhesive layer is disposed between the solar module and the coplanar structure, and the coplanar structure is attached to the solar module through the transparent adhesive layer.

According to the self-powered display device of the aforementioned aspect, wherein the self-powered display device further includes a control module and an energy storage module. The control module is electrically connected to the solar module, the active display panel, and the cholesteric liquid crystal display panel. The energy storage module is electrically connected to the control module. The control module is configured to control the energy storage module to store the electrical power generated by the solar module, and to control the energy storage module to supply the electrical power to the control module, the active display panel, and the cholesteric liquid crystal display panel.

According to the self-powered display device of the aforementioned aspect, wherein the control module performs a power allocation control according to a power generation amount of the solar module, a power consumption of the active display panel, and a residual power amount, such that the residual power amount, the power consumption, and the power generation amount satisfy: Pa / P_LED > 1, and P_LED / PV < 0.75. Wherein PV represents the power generation amount, P_LED represents the power consumption, Pa represents the residual power amount, and the residual power amount is a remaining electrical power obtained after subtracting a screen-update power consumption of the cholesteric liquid crystal display panel and a static power consumption of the control module from the electrical power generated by the solar module.

### BRIEF DESCRIPTION OF THE DRAWINGS

The present disclosure can be more fully understood by reading the following detailed description of the embodiment, with reference made to the accompanying drawings as follows:
Fig. 1 illustrates an exploded schematic view of a self-powered display device according to a first embodiment of the present disclosure.
Fig. 2 illustrates a cross-sectional schematic view of the self-powered display device according to the first embodiment of the present disclosure.
Fig. 3 illustrates a schematic architecture view of the self-powered display device according to the first embodiment of the present disclosure.
Fig. 4 illustrates a schematic view of a transmission spectrum of a cholesteric liquid crystal display panel of the self-powered display device shown in Fig. 1.
Fig. 5 illustrates a schematic view showing a relationship between a power consumption ratio and a power consumption-to-power generation ratio of the self-powered display device shown in Fig. 1 under different effective sunshine durations.
Fig. 6 illustrates a cross-sectional schematic view of a self-powered display device according to a second embodiment of the present disclosure.
Fig. 7 illustrates a cross-sectional schematic view of a self-powered display device according to a third embodiment of the present disclosure.
Fig. 8 illustrates an exploded schematic view of a self-powered display device according to a fourth embodiment of the present disclosure.
Fig. 9 illustrates a cross-sectional schematic view of the self-powered display device according to the fourth embodiment of the present disclosure.

### DETAILED DESCRIPTION

The embodiment will be described with the drawings. For clarity, some practical details will be described below. However, it should be noted that the present disclosure should not be limited by the practical details, that is, in some embodiment, the practical details is unnecessary. In addition, for simplifying the drawings, some conventional structures and elements will be simply illustrated, and repeated elements may be represented by the same labels.

It will be understood that when an element (or device) is referred to as be "connected" to another element, it can be directly connected to the other element, or it can be indirectly connected to the other element, that is, intervening elements may be present. In contrast, when an element is referred to as be "directly connected to" another element, there are no intervening elements present. In addition, the terms first, second, third, etc. are used herein to describe various elements or components, these elements or components should not be limited by these terms. Consequently, a first element or component discussed below could be termed a second element or component.

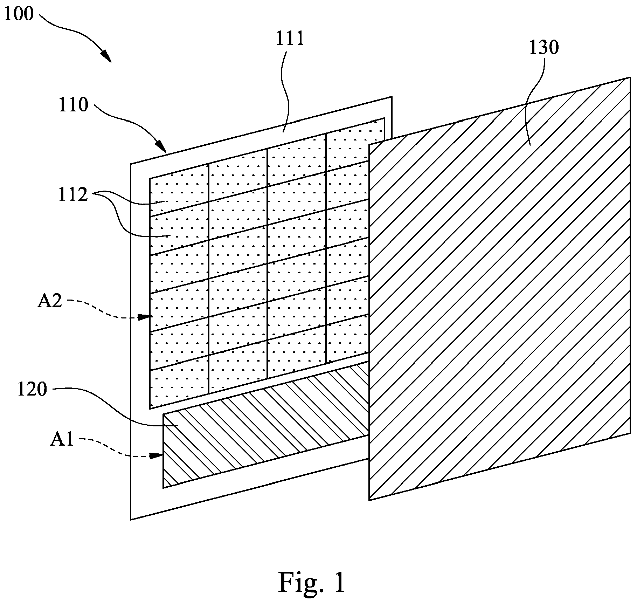

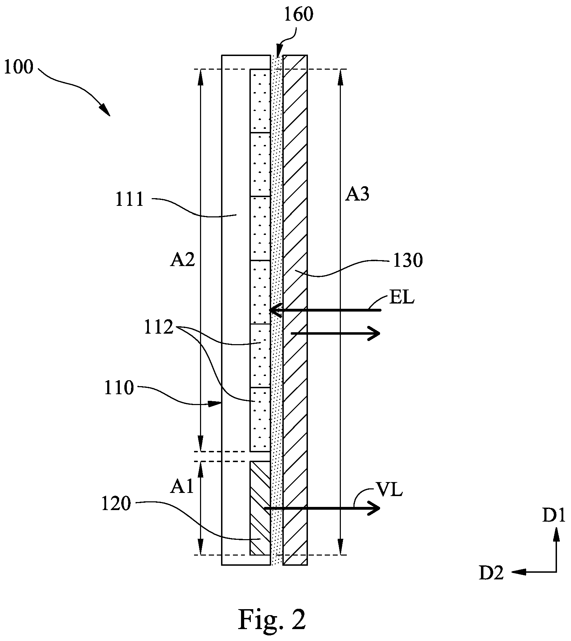

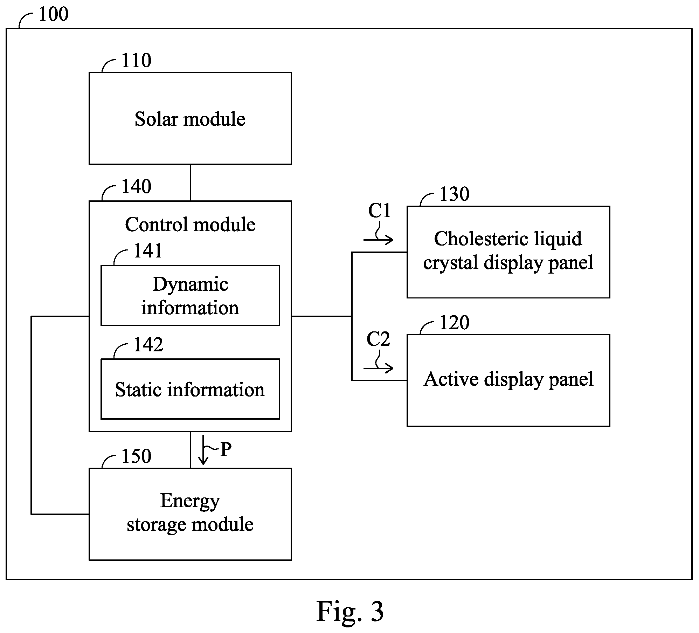

Please refer to Figs. 1, 2 and 3 together, wherein Fig. 1 illustrates an exploded schematic view of a self-powered display device 100 according to a first embodiment of the present disclosure, Fig. 2 illustrates a cross-sectional schematic view of the self-powered display device 100 according to the first embodiment of the present disclosure, and Fig. 3 illustrates a schematic architecture view of the self-powered display device 100 according to the first embodiment of the present disclosure. As shown in Figs. 1 to 3, the self-powered display device 100 includes a solar module 110, an active display panel 120, and a cholesteric liquid crystal display panel 130.

The solar module 110 includes a substrate 111. The substrate 111 has a non-power-generating region A1 and a power-generating region A2, and the non-power-generating region A1 is different from the power-generating region A2. In other words, the non-power-generating region A1 and the power-generating region A2 are disposed in different regions of the substrate 111. The non-power-generating region A1 and the power-generating region A2 are adjacent to each other and do not overlap along a first direction D1.

The active display panel 120 is disposed on the non-power-generating region A1 and electrically connected to the solar module 110. In the first embodiment, the active display panel 120 is laminated on the non-power-generating region A1 of the substrate 111. In other words, the active display panel 120 is fixed to the substrate 111 through a laminating process, such that the active display panel 120 and the substrate 111 form a coplanar structure along the first direction D1. In some embodiments, the active display panel 120 can be directly or indirectly electrically connected to the solar module 110 through conductive wires or conductive adhesive, or can be electrically connected to the solar module 110 through a control module 140 (as shown in Fig. 3).

The cholesteric liquid crystal display panel 130 is disposed on the coplanar structure formed by the active display panel 120 and the substrate 111, and is stacked thereon along a second direction D2, wherein the second direction D2 is substantially perpendicular to the first direction D1. In addition, the cholesteric liquid crystal display panel 130 is electrically connected to the solar module 110 and has a display region A3. The display region A3 is aligned with and covers the non-power-generating region A1 and the power-generating region A2. In some embodiments, the cholesteric liquid crystal display panel 130 can also be directly or indirectly electrically connected to the solar module 110 through conductive wires or conductive adhesive, or can be electrically connected to the solar module 110 through the control module 140 (as shown in Fig. 3).

As shown in Fig. 2, the self-powered display device 100 can further include a transparent adhesive layer 160. The transparent adhesive layer 160 is disposed between the coplanar structure and the cholesteric liquid crystal display panel 130, such that the cholesteric liquid crystal display panel 130 is attached to the coplanar structure through the transparent adhesive layer 160. In some embodiments, the transparent adhesive layer 160 can be an optically clear adhesive (OCA) or another adhesive material having high light transmittance so as to reduce optical loss and improve overall light transmission efficiency.

The solar module 110 can further include a plurality of power-generating units 112 disposed on the power-generating region A2. In detail, the power-generating units 112 are laminated on the power-generating region A2 of the substrate 111 and can be arranged in an array. When ambient light EL, as shown in Fig. 2, is incident upon the cholesteric liquid crystal display panel 130, the cholesteric liquid crystal display panel 130 can reflect a portion of the wavelength bands of the ambient light EL to display an image, while at least a portion of the ambient light EL that is not reflected can pass through the cholesteric liquid crystal display panel 130 and be incident upon the power-generating units 112 to perform photoelectric conversion and thereby generate an electrical power P, as shown in Fig. 3. Therefore, the cholesteric liquid crystal display panel 130 can achieve a balance between utilization of the ambient light EL and energy harvesting without obstructing the solar module 110 from receiving energy.

The power-generating unit 112 can include at least one photoelectric conversion element, such as a solar cell, and the material thereof can be monocrystalline silicon, polycrystalline silicon, amorphous silicon, thin-film, organic, perovskite, or dye-sensitized solar cell material, but the present disclosure is not limited thereto. Through the foregoing arrangement, the display structure and the power-generation structure can be integrated into the same device. Accordingly, the electrical power P generated by the solar module 110 can be supplied to the active display panel 120 and the cholesteric liquid crystal display panel 130. Because the cholesteric liquid crystal display panel 130 has a low-power-consumption characteristic and cooperates with the power supply provided by the solar module 110, the self-powered display device 100 can operate without an external power source.

The active display panel 120 can be a light-emitting diode (LED) display panel, and the cholesteric liquid crystal display panel 130 serves as a transflective display panel. Specifically, the cholesteric liquid crystal display panel 130 has a bistable characteristic. After a driving voltage is removed, the cholesteric liquid crystal display panel 130 can still maintain a display state of static information 142 by reflecting the ambient light EL of a specific wavelength through a planar state arrangement of liquid crystal molecules. In addition, when viewed from the display region A3 along the second direction D2, the active display panel 120 can be configured to display dynamic information 141 having a high refresh rate in a direction opposite to the second direction D2, while the cholesteric liquid crystal display panel 130 can display the static information 142 having a low refresh rate in the direction opposite to the second direction D2 by reflecting the ambient light EL, wherein the high refresh rate is greater than the low refresh rate. Such a reflective display mechanism enables the contrast and visibility of the static information 142 to increase as the intensity of the ambient light EL increases, while consuming substantially no electrical power P during image retention. In other embodiments, the cholesteric liquid crystal display panel 130 can be replaced with other types of transflective display panels.

As shown in Fig. 3, the self-powered display device 100 can further include a control module 140 and an energy storage module 150. The control module 140 is electrically connected to the solar module 110, the active display panel 120 and the cholesteric liquid crystal display panel 130. The energy storage module 150 is electrically connected to the control module 140.

The control module 140 is configured to control the energy storage module 150 to manage storage of the electrical power P generated by the solar module 110 and to regulate power distribution of the electrical power P supplied from the energy storage module 150 to the control module 140, the active display panel 120 and the cholesteric liquid crystal display panel 130 according to system load requirements. Specifically, the energy storage module 150 can be a battery pack or a similar energy-storage element. The control module 140 can be a charge/discharge controller, a microcontroller unit (MCU), or a timing controller (TCON). The control module 140 further has a communication interface configured to receive display data transmitted from an external device (not shown, such as a host device or a cloud server). After being processed by the control module 140, the display data is classified into the dynamic information 141 having a high-refresh-rate characteristic and the static information 142 having a low-refresh-rate characteristic or a fixed display-content characteristic.

The control module 140 includes signal encoding and driving logic. The control module 140 can control the active display panel 120 to display the dynamic information 141 through a first control signal C1, and can control the cholesteric liquid crystal display panel 130 to display the static information 142 through a second control signal C2. In addition, the first control signal C1 can carry the dynamic information 141 and a first driving waveform signal configured to drive a light-emitting-element driving circuit (e.g., an active matrix circuit) of the active display panel 120. The second control signal C2 can carry the static information 142 and a second driving waveform signal configured to control alignment of liquid crystal molecules in the cholesteric liquid crystal display panel 130.

Therefore, the self-powered display device 100 of the present disclosure can dynamically adjust activation timing and operating frequency of the active display panel 120 and the cholesteric liquid crystal display panel 130 according to display requirements. For example, when real-time changing information is to be displayed, the control module 140 activates the active display panel 120 to provide a smooth visual effect with a high refresh rate, while the cholesteric liquid crystal display panel 130 maintains an existing image without requiring full-area rescanning, thereby reducing unnecessary power consumption. Conversely, when only the static information 142, such as environmental data or fixed text, is to be displayed, the active display panel 120 can be switched to an off state, and the cholesteric liquid crystal display panel 130 can form an image by reflecting the ambient light EL, thereby achieving a near-zero-power standby display. Through such a hybrid structural configuration, together with the self-powered characteristic of the solar module 110, the limitations of conventional electronic paper displays in presenting dynamic images due to insufficient refresh rates can be overcome, while simultaneously achieving the technical objectives of low power consumption, high efficiency, and real-time information updating.

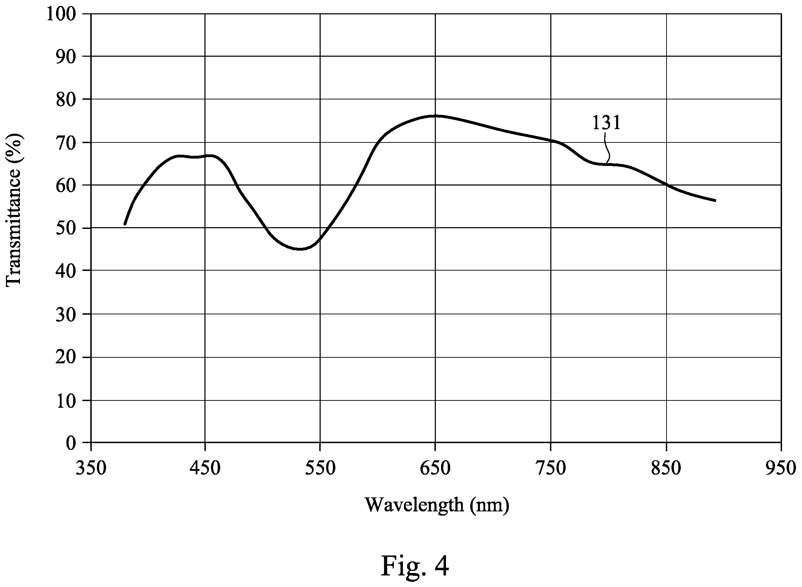

Please refer to Fig. 4, which illustrates a schematic view of a transmission spectrum of the cholesteric liquid crystal display panel 130 of the self-powered display device 100 shown in Fig. 1. As shown in Fig. 4, a transmittance spectrum curve 131 of the cholesteric liquid crystal display panel 130 represents a relationship between transmittance and wavelength. In detail, when the cholesteric liquid crystal display panel 130 operates in a reflective mode (Planar mode), the cholesteric liquid crystal display panel 130 exhibits different transmittance and reflectance characteristics with respect to the ambient light EL of different wavelengths. In certain wavelength ranges (such as blue light at approximately 450 nm and red light at approximately 650 nm), the transmittance is relatively high, whereas in other wavelength ranges, the reflectance is relatively high. Therefore, when a wavelength of visible light emitted by the active display panel 120 falls within a high-transmittance band, the visible light can effectively pass through the cholesteric liquid crystal display panel 130, thereby reducing reflection interference and improving display visibility. For example, when the cholesteric liquid crystal display panel 130 is a green cholesteric liquid crystal display (Green ChLCD) operating in the reflective mode, a red light-emitting diode (Red LED) or a blue light-emitting diode (Blue LED) can be selected as an active display light source.

In some embodiments, the active display panel 120 can include a plurality of light-emitting units laminated on the non-power-generating region A1 of the substrate 111. Through such an arrangement, the light-emitting units can emit visible light VL toward the cholesteric liquid crystal display panel 130 (as shown in Fig. 2). In addition, an optical path of the visible light VL bypasses the solar module 110 and therefore is not blocked by the power-generating units 112. Furthermore, a wavelength range of the visible light VL is selectively configured to fall within the high-transmittance band of the cholesteric liquid crystal display panel 130. Through the cooperative arrangement of the foregoing spatial layout and wavelength selection, the visible light VL can efficiently pass through the cholesteric liquid crystal display panel 130, thereby reducing reflection loss and intensity attenuation during light transmission and improving brightness and color saturation of a displayed image.

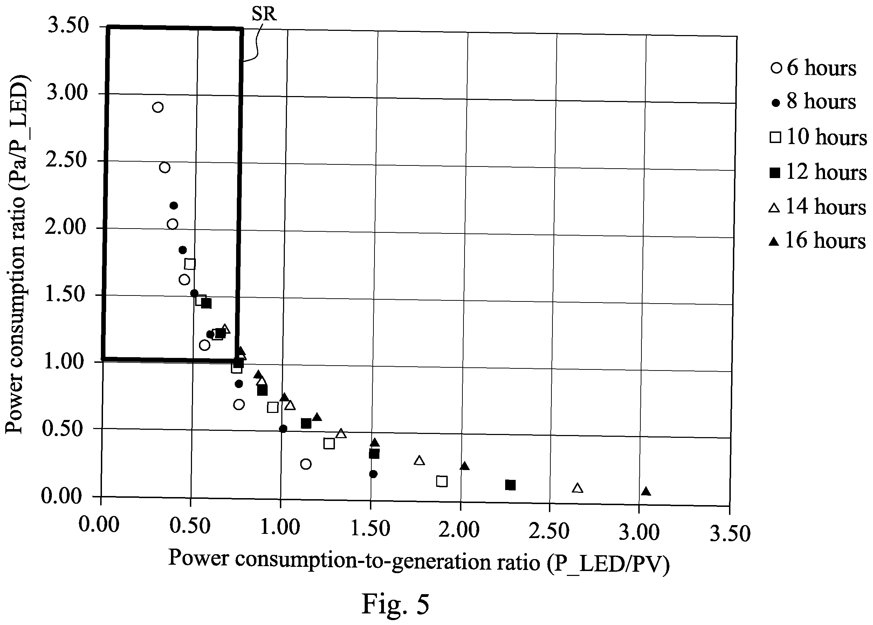

Please refer to Fig. 5, which illustrates a schematic view showing a relationship between a power consumption ratio (Pa/P_LED) and a power consumption-to-power generation ratio (P_LED/PV) of the self-powered display device 100 shown in Fig. 1 under different effective sunshine durations. Specifically, a power generation amount of the solar module 110 varies according to sunlight conditions, while the active display panel 120 consumes a corresponding amount of power according to its operating duration and display state. During power allocation control performed by the control module 140, a screen-update power consumption of the cholesteric liquid crystal display panel 130 and a static power consumption of the control module 140 are subtracted from a total power generation amount to obtain a residual power amount. The residual power amount represents an upper limit of available electrical power that can be supplied by the energy storage module 150 to the active display panel 120.

As shown in Fig. 5, the control module 140 performs power allocation control according to the power generation amount, the power consumption and the residual power amount, and adjusts operating parameters of the active display panel 120 accordingly. To ensure a balance between power supply and power demand, the control module 140 adjusts the operating parameters such that the following conditions are satisfied: Pa / P_LED > 1, and P_LED / PV < 0.75, wherein PV represents the power generation amount, P_LED represents the power consumption, Pa represents the residual power amount, and the residual power amount is a remaining electrical power obtained after subtracting the screen-update power consumption of the cholesteric liquid crystal display panel 130 and the static power consumption of the control module 140 from the electrical power P generated by the solar module 110. The physical significance of the foregoing conditions is that: First, the residual power amount (Pa) should be greater than the power consumption of the active display panel 120 to ensure sufficient power supply; Second, the power consumption of the active display panel 120 should be maintained within a predetermined proportion of the total power generation amount (for example, below 75%) so as to reserve an operational margin.

When the power allocation control satisfies the foregoing conditions, a corresponding data point falls within a self-powered feasible operating region SR shown in Fig. 5. An operating condition located within the self-powered feasible operating region SR indicates that the power consumption of the active display panel 120 is lower than the remaining electrical power allocable by the energy storage module 150, and that an overall energy load is maintained within a reasonable range of the power-generation capability of the solar module 110. Accordingly, the self-powered display device 100 can maintain a stable power supply even under different sunlight conditions and effectively avoid energy depletion or insufficient power supply, thereby improving energy utilization efficiency.

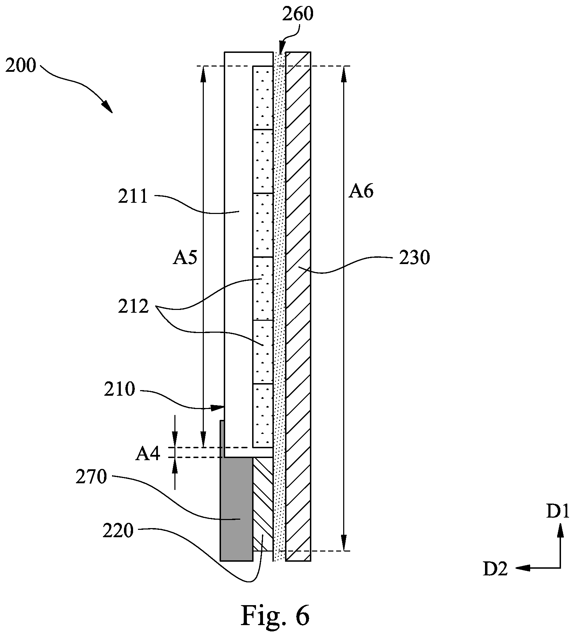

Please refer to Fig. 6, which illustrates a cross-sectional schematic view of a self-powered display device 200 according to a second embodiment of the present disclosure. As shown in Fig. 6, the self-powered display device 200 has a basic structure similar to that of the first embodiment and includes a solar module 210, an active display panel 220, a cholesteric liquid crystal display panel 230, a transparent adhesive layer 260, and a control module and an energy storage module which are not shown. For simplicity, only differences between the second embodiment and the first embodiment are described below, while identical or similar components, functions, and arrangements are not repeated.

The solar module 210 includes a substrate 211 and a plurality of power-generating units 212. The substrate 211 has a non-power-generating region A4 and a power-generating region A5, and the non-power-generating region A4 and the power-generating region A5 are disposed in different regions of the substrate 211. The power-generating units 212 are laminated on the power-generating region A5 of the substrate 211. Different from the first embodiment, the power-generating region A5 is disposed in a central region of the substrate 211 and occupies a majority of the area thereof, while the non-power-generating region A4 surrounds the power-generating region A5 and is disposed around a periphery thereof.

The active display panel 220 is attached to the non-power-generating region A4 of the substrate 211, such that the active display panel 220 and the substrate 211 form a coplanar structure. By disposing the active display panel 220 in a peripheral region surrounding the power-generating region A5, obstruction of the primary power-generating region (i.e., the power-generating region A5) can be avoided, thereby improving overall power-generation efficiency.

The cholesteric liquid crystal display panel 230 is disposed on the coplanar structure formed by the active display panel 220 and the substrate 211 and is stacked thereon along the second direction D2. In addition, the cholesteric liquid crystal display panel 230 can be attached to the coplanar structure through the transparent adhesive layer 260 so as to maintain favorable optical transmission characteristics. The cholesteric liquid crystal display panel 230 has a display region A6, and the display region A6 is aligned with and covers the non-power-generating region A4 and the power-generating region A5.

The self-powered display device 200 can further include a light-shielding element 270. The light-shielding element 270 is disposed between the active display panel 220 and the substrate 211, or is disposed on a side thereof opposite to the cholesteric liquid crystal display panel 230. In the second embodiment, the light-shielding element 270 and the cholesteric liquid crystal display panel 230 are respectively located on opposite sides of the active display panel 220. The light-shielding element 270 can be a black shielding film and can at least partially cover a region between the active display panel 220 and the substrate 211 so as to form a light-shielding structure. Accordingly, the light-shielding element 270 can block light leakage generated by the active display panel 220 from being transmitted toward the cholesteric liquid crystal display panel 230, thereby preventing the image quality of the cholesteric liquid crystal display panel 230 from being adversely affected by internal reflection or scattering of the leaked light. Through the foregoing arrangement, display contrast and image clarity can be effectively improved, enabling the self-powered display device 200 to maintain display functionality while also providing enhanced image quality.

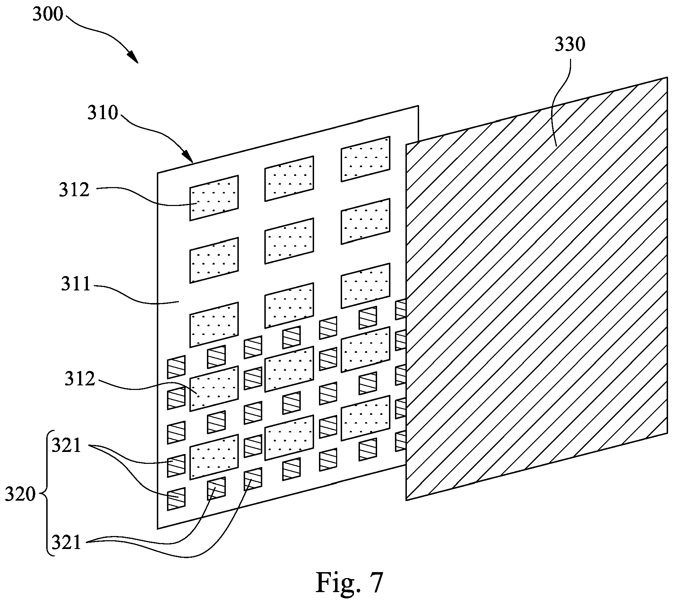

Please refer to Fig. 7, which illustrates a cross-sectional schematic view of a self-powered display device 300 according to a third embodiment of the present disclosure. As shown in Fig. 7, the self-powered display device 300 has a basic structure similar to that of the first embodiment and includes a solar module 310, an active display panel 320, a cholesteric liquid crystal display panel 330, and a control module, an energy storage module, and a transparent adhesive layer which are not shown. For simplicity, only differences between the third embodiment and the first embodiment are described below, while identical or similar component functions and arrangements are not repeated.

The solar module 310 includes a substrate 311 and a plurality of power-generating units 312 laminated on a power-generating region of the substrate 311. The power-generating units 312 are spaced apart from one another and arranged in an array, such that the power-generating region exhibits a discrete distribution structure and a plurality of non-power-generating regions are formed among the power-generating units 312.

The active display panel 320 includes a plurality of light-emitting units 321. The light-emitting units 321 are laminated on the non-power-generating regions of the substrate 311 and arranged around the power-generating units 312, such that the light-emitting units 321 and the power-generating units 312 are distributed in an interleaved manner on the substrate 311. Therefore, the active display panel 320 and the solar module 310 can form a coplanar structure on the same plane, thereby avoiding large-area obstruction of the power-generating region while maintaining display functionality.

The cholesteric liquid crystal display panel 330 is stacked along the second direction D2 on the coplanar structure formed by the active display panel 320 and the solar module 310. A display region of the cholesteric liquid crystal display panel 330 is aligned with and covers the overall distribution region of the power-generating units 312 and the light-emitting units 321. Therefore, ambient light can pass through the cholesteric liquid crystal display panel 330 and be incident upon the power-generating units 312 for power generation, while visible light generated by the active display panel 320 can also pass through the cholesteric liquid crystal display panel 330 to provide image display.

In some embodiments, the light-emitting units 321 can be Micro LEDs or Mini LEDs. By employing the light-emitting units 321 having relatively small dimensions, the arrangement density and space utilization efficiency of the light-emitting units 321 and the power-generating units 312 can be further improved. As a result, the overall optoelectronic integration performance of the device can be optimized while taking into account both display resolution and power-generation efficiency.

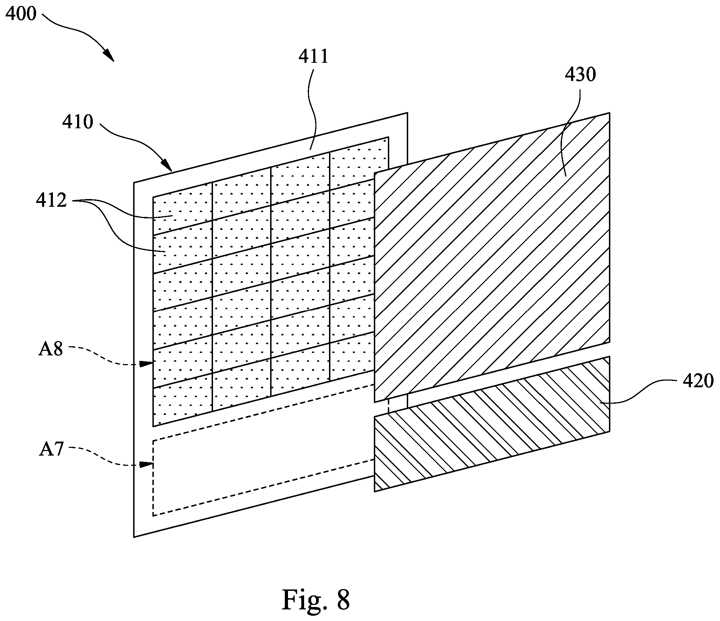

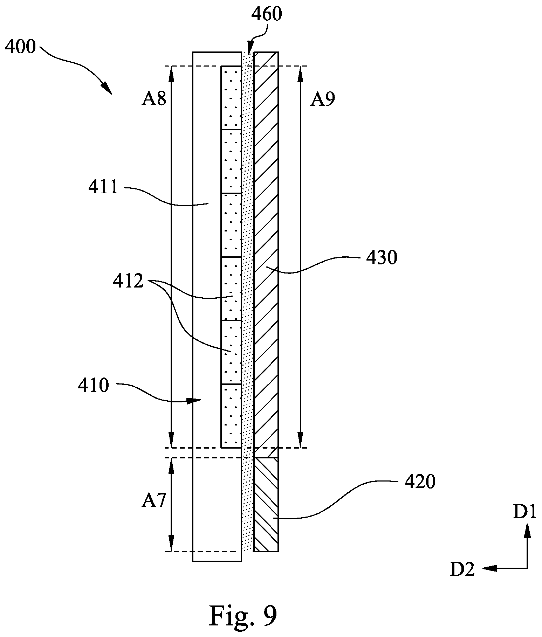

Please refer to Figs. 8 and 9 together, wherein Fig. 8 illustrates an exploded schematic view of a self-powered display device 400 according to a fourth embodiment of the present disclosure, and Fig. 9 illustrates a cross-sectional schematic view of the self-powered display device 400 according to the fourth embodiment of the present disclosure. As shown in Figs. 8 and 9, the self-powered display device 400 has a basic structure similar to that of the first embodiment and includes a solar module 410, an active display panel 420, a cholesteric liquid crystal display panel 430, a transparent adhesive layer 460, and a control module and an energy storage module which are not shown. For simplicity, only differences between the fourth embodiment and the first embodiment are described below, while identical or similar component functions and arrangements are not repeated.

The solar module 410 includes a substrate 411 and a plurality of power-generating units 412. The substrate 411 has a non-power-generating region A7 and a power-generating region A8, and the non-power-generating region A7 and the power-generating region A8 are disposed in different regions of the substrate 411. The power-generating units 412 are laminated on the power-generating region A8 of the substrate 411. Different from the first embodiment, the active display panel 420 and the cholesteric liquid crystal display panel 430 are disposed adjacent to each other along the first direction D1 to form a coplanar structure. The active display panel 420 is disposed on the non-power-generating region A7, and the cholesteric liquid crystal display panel 430 is disposed on the power-generating region A8. The cholesteric liquid crystal display panel 430 has a display region A9, and the display region A9 is aligned with and covers the power-generating region A8.

The coplanar structure formed by the active display panel 420 and the cholesteric liquid crystal display panel 430 can serve as an integrated display module. The transparent adhesive layer 460 is disposed between the solar module 410 and the coplanar structure, such that the coplanar structure is attached to the solar module 410 through the transparent adhesive layer 460. Through such an arrangement, the active display panel 420 and the cholesteric liquid crystal display panel 430 can first be integrated and aligned with each other before being attached to the solar module 410. This arrangement is advantageous for modularized manufacturing processes and assembly precision control, and can further reduce process deviations and stress effects caused by directly attaching individual components to the substrate 411, while maintaining light-incidence efficiency of the power-generating region A8 and overall display performance.

In summary, the self-powered display device of the present disclosure provides the following advantages. First, by integrating the solar module, the active display panel and the cholesteric liquid crystal display panel, and by utilizing the partial light-transmission characteristic of the cholesteric liquid crystal display panel, ambient light can be simultaneously used for image display and photoelectric conversion, thereby improving overall energy utilization efficiency without obstructing the power-generating region. Second, the active display panel and the cholesteric liquid crystal display panel are respectively responsible for displaying dynamic information and static information, and the control module performs display-task allocation and power allocation control. Accordingly, power consumption can be significantly reduced while maintaining display quality, thereby enabling self-powered operation. Third, through different structural configurations of the various embodiments, power-generation efficiency, display performance and manufacturing flexibility can be simultaneously taken into consideration, thereby further improving applicability and reliability of the overall device in various application scenarios.

## Claims

1. A self-powered display device (100, 200, 300), **characterized in** comprising:
a solar module (110, 210, 310) comprising a substrate (111, 211, 311), wherein the substrate (111, 211, 311) has a non-power-generating region (A1, A4) and a power-generating region (A2, A5), and the non-power-generating region (A1, A4) is different from the power-generating region (A2, A5);
an active display panel (120, 220, 320) disposed on the non-power-generating region (A1, A4) and electrically connected to the solar module (110, 210, 310), wherein the active display panel (120, 220, 320) and the substrate (111, 211, 311) form a coplanar structure; and
a cholesteric liquid crystal display panel (130, 230, 330) stacked on the coplanar structure and electrically connected to the solar module (110, 210, 310), wherein the cholesteric liquid crystal display panel (130, 230, 330) has a display region (A3, A6), and the display region (A3, A6) covers the non-power-generating region (A1, A4) and the power-generating region (A2, A5);
wherein the solar module (110, 210, 310) is configured to generate an electrical power (P), and the electrical power (P) is supplied to the active display panel (120, 220, 320) and the cholesteric liquid crystal display panel (130, 230, 330);
wherein the active display panel (120, 220, 320) is configured to display a dynamic information (141) having a high refresh rate, and the cholesteric liquid crystal display panel (130, 230, 330) is configured to display a static information (142) having a low refresh rate.

2. The self-powered display device (100, 300) of claim 1, wherein the active display panel (120, 320) is laminated on the non-power-generating region (A1) of the substrate (111, 311).

3. The self-powered display device (200) of claim 1 or claim 2, wherein the active display panel (220) is attached to the non-power-generating region (A4) of the substrate (211).

4. The self-powered display device (100, 200, 300) of any of claims 1-3, wherein the solar module (110, 210, 310) further comprises a plurality of power-generating units (112, 212, 312), and the power-generating units (112, 212, 312) are laminated on the power-generating region (A2, A5) and configured to generate the electrical power (P).

5. The self-powered display device (300) of any of claims 1-4, wherein the power-generating units (312) are spaced apart from one another and arranged in an array.

6. The self-powered display device (300) of any of claims 1-5, wherein the active display panel (320) comprises a plurality of light-emitting units (321), and the light-emitting units (321) are laminated on the non-power-generating region and arranged around the power-generating units (312).

7. The self-powered display device (200) of any of claims 1-6, further comprising:
a light-shielding element (270) partially covering the active display panel (220) and the substrate (211), wherein the light-shielding element (270) and the cholesteric liquid crystal display panel (230) are respectively located on opposite sides of the active display panel (220).

8. The self-powered display device (100, 200) of any of claims 1-7, further comprising:
a transparent adhesive layer (160, 260) disposed between the coplanar structure and the cholesteric liquid crystal display panel (130, 230), wherein the cholesteric liquid crystal display panel (130, 230) is attached to the coplanar structure through the transparent adhesive layer (160, 260).

9. The self-powered display device (100) of any of claims 1-8, wherein the active display panel (120) is configured to emit a visible light (VL) toward the cholesteric liquid crystal display panel (130), and a wavelength range of the visible light (VL) falls within a high-transmittance band of the cholesteric liquid crystal display panel (130).

10. The self-powered display device (100) of any of claims 1-9, further comprising:
a control module (140) electrically connected to the solar module (110), the active display panel (120), and the cholesteric liquid crystal display panel (130); and
an energy storage module (150) electrically connected to the control module (140);
wherein the control module (140) is configured to control the energy storage module (150) to store the electrical power (P) generated by the solar module (110), and to control the energy storage module (150) to supply the electrical power (P) to the control module (140), the active display panel (120), and the cholesteric liquid crystal display panel (130).

11. The self-powered display device (100) of any of claims 1-10, wherein the control module (140) performs a power allocation control according to a power generation amount of the solar module (110), a power consumption of the active display panel (120), and a residual power amount, such that the residual power amount, the power consumption, and the power generation amount satisfy: $Pa / P_LED > 1 , and P_LED / PV < 0.75 ;$ wherein PV represents the power generation amount, P_LED represents the power consumption, Pa represents the residual power amount, and the residual power amount is a remaining electrical power obtained after subtracting a screen-update power consumption of the cholesteric liquid crystal display panel (130) and a static power consumption of the control module (140) from the electrical power (P) generated by the solar module (110).

12. A self-powered display device (400), **characterized in** comprising:
a solar module (410) comprising a substrate (411), wherein the substrate (411) has a non-power-generating region (A7) and a power-generating region (A8), and the non-power-generating region (A7) is different from the power-generating region (A8);
an active display panel (420) disposed on the non-power-generating region (A7) and electrically connected to the solar module (410); and
a cholesteric liquid crystal display panel (430) disposed on the power-generating region (A8) and electrically connected to the solar module (410), wherein the cholesteric liquid crystal display panel (430) and the active display panel (420) form a coplanar structure, the cholesteric liquid crystal display panel (430) has a display region (A9), and the display region (A9) covers the power-generating region (A8);
wherein the solar module (410) is configured to generate an electrical power, and the electrical power is supplied to the active display panel (420) and the cholesteric liquid crystal display panel (430);
wherein the active display panel (420) is configured to display a dynamic information having a high refresh rate, and the cholesteric liquid crystal display panel (430) is configured to display a static information having a low refresh rate.

13. The self-powered display device (400) of claim 12, wherein the active display panel (420) is attached to the non-power-generating region (A7) of the substrate (411), and the cholesteric liquid crystal display panel (430) is attached to the power-generating region (A9) of the substrate (411).

14. The self-powered display device (400) of any of claim 12 or claim 13, wherein the solar module (410) further comprises a plurality of power-generating units (412), and the power-generating units (412) are laminated on the power-generating region (A8) and configured to generate the electrical power.

15. The self-powered display device (400) of any of claims 12-14, further comprising:
a transparent adhesive layer (460) disposed between the solar module (410) and the coplanar structure, wherein the coplanar structure is attached to the solar module (410) through the transparent adhesive layer (460).

16. The self-powered display device (400) of any of claims 12-15, further comprising:
a control module electrically connected to the solar module (410), the active display panel (420), and the cholesteric liquid crystal display panel (430); and
an energy storage module electrically connected to the control module;
wherein the control module is configured to control the energy storage module to store the electrical power generated by the solar module (410), and to control the energy storage module to supply the electrical power to the control module, the active display panel (420), and the cholesteric liquid crystal display panel (430).

17. The self-powered display device (400) of any of claims 12-16, wherein the control module performs a power allocation control according to a power generation amount of the solar module (410), a power consumption of the active display panel (420), and a residual power amount, such that the residual power amount, the power consumption, and the power generation amount satisfy: $Pa / P_LED > 1 , and P_LED / PV < 0.75 ;$ wherein PV represents the power generation amount, P_LED represents the power consumption, Pa represents the residual power amount, and the residual power amount is a remaining electrical power obtained after subtracting a screen-update power consumption of the cholesteric liquid crystal display panel (430) and a static power consumption of the control module from the electrical power generated by the solar module (410).
